Europäisches Patentamt

European Patent Office

Office européen des brevets

(11) Veröffentlichungsnummer: **0 314 831**
**A1**

## (12) EUROPÄISCHE PATENTANMELDUNG

(21) Anmeldenummer: 87116366.3

(22) Anmeldetag: 06.11.87

(51) Int. Cl.4: **F16B 15/02 , B25C 5/10**

(43) Veröffentlichungstag der Anmeldung:
**10.05.89 Patentblatt 89/19**

(84) Benannte Vertragsstaaten:
**AT CH DE ES FR GR IT LI**

(71) Anmelder: **Joh. Friedrich Behrens AG**
**Bogenstrasse 43 Postfach 1480**
**D-2070 Ahrensburg(DE)**

(72) Erfinder: **Kuck, Manfred**
**Rotdornweg 13**
**D-2070 Ahrensburg(DE)**
Erfinder: **Albrecht, Klaus**
**Heimstättenstrasse 8**
**D-2067 Reinfeld(DE)**

(74) Vertreter: **Dipl.-Ing. H. Hauck Dipl.-Phys. W.**
**Schmitz Dipl.-Ing. E. Graalfs Dipl.-Ing. W.**
**Wehnert Dr.-Ing. W. Döring**
**Neuer Wall 41**
**D-2000 Hamburg 36(DE)**

(54) Befestigungsmittelstreifen und Eintreibgerät zum Eintreiben der Befestigungsmittel vom Befestigungsmittelstreifen.

(57) Aus mehreren U-förmigen Befestigungsmitteln zusammengesetzter Befestigungsmittelstreifen oder -stab für Eintreibgeräte, wobei die Länge des einen Schenkels der den Befestigungsmittelstreifen bildenden Befestigungsmittel gegenüber dem anderen deutlich kürzer ist.

FIG 1

EP 0 314 831 A1

## Befestigungsmittelstreifen und Eintreibgerät zum Eintreiben der Befestigungsmittel vom Befestigungsmittelstreifen

Die Erfindung bezieht sich auf einen aus mehreren U-förmigen Befestigungsmitteln zusammengesetzten Befestigungsmittelstreifen oder -stab nach dem Oberbegriff des Patentanspruchs 1.

Im Bauwesen und auf verschiedenen anderen Gebieten werden zur Befestigung oder Halterung von Teilen Haken verwendet. Ein weiteres Anwendungsgebiet ist zum Beispiel der Weinbau; die einzelnen Drähte, an denen die Ranken der Rebstöcke hochgebunden werden, sind mittels Haken an Stützstangen oder -pfählen befestigt. Das Einschlagen der Haken von Hand ist umständlich und zeitraubend, vor allen Dingen, wenn das Werkstück aus relativ festem Material besteht. Dies trifft zum Beispiel zu auf Haken, wie sie durch das DE-Gm 18 20 009 bekanntgeworden sind. Der bekannte krampenförmige Haken dient zur Befestigung von Profilen an einer Unterkonstruktion zwecks Anbringung von Putzmatten.

Der Erfindung liegt daher die Aufgabe zugrunde, einen Befestigungsmittelstreifen zu schaffen, der aus mit einem kraftgetriebenen Eintreibgerät zu verarbeitenden Haken gebildet ist.

Diese Aufgabe wird erfindungsgemäß durch das Merkmal des Kennzeichnungsteils des Patentanspruchs 1 gelöst.

Bei der Erfindung wird von der Erkenntnis ausgegangen, daß ein Haken sehr gut aus einer U-förmigen Klammer, wie sie allgemein bekannt ist, gebildet werden kann, wenn ein Schenkel der Kammer deutlich verkürzt wird. U-Klammern lassen sich bekanntlich sehr einfach zu Klammernstreifen oder -stäben zusammenfügen, beispielsweise mit Hilfe eines geeigneten Lacks oder dergleichen und in Eintreibgeräten verarbeiten. Das gleiche trifft für den erfindungsgemäßen Befestigungsmittelstreifen zu. Im stegnahen Bereich weist jedes Befestigungsmittel an beiden Enden des Steges einen Schenkelabschnitt auf, so daß eine einwandfreie Führung auf einer Führungsschiene im Magazin des Eintreibgeräts erfolgen kann. Es versteht sich, daß das Eintreibgerät so ausgelegt werden muß, daß der Stößel das erfindungsgemäße hakenförmige Befestigungsmittel nicht vollständig in das Werkstück einschlägt, sondern vielmehr nur so weit, daß das freie Ende des kürzeren Schenkels noch einem ausreichenden Abstand zur Werkstückoberfläche aufweist, so daß ein zu haltendes Teil, wie zum Beispiel ein Draht, von der Hakenöffnung aufgenommen werden kann.

Der erfindungsgemäße Befestigungsmittelstreifen oder -stab erlaubt mithin die industrielle Verarbeitung von hakenförmigen Befestigungsmitteln mit Hilfe von kraftgetriebenen Eintreibgeräten und damit eine weitaus rationellere Arbeitsweise als mit herkömmlichen Befestigungsmitteln.

Bekannte Eintreibgeräte für U-förmige Befestigungsmittel weisen ein Magazin zur Aufnahme des Befestigungsmittelstreifens auf, der mittels eines Vorschiebers in Richtung eines in einem Mündungswerkzeug ausgebildeten Eintreibkanals vorgeschoben wird. Der Eintreibstößel, der beispielsweise pneumatisch, elektrisch oder dergleichen angetrieben ist, trennt jeweils das vorderste Befestigungsmittel vom Befestigungsmittelstreifen und treibt es über den Eintreibkanal in das Werkstück ein. Ein derartiges Gerät kann ohne einen Umbau für den erfindungsgemäßen Befestigungsmittelstreifen verwendet werden. Nur die untere Totpunktlage des Stößels ist derart, daß das Befestigungsmittel in der oben beschriebenen Weise nur teilweise eingestrichen ist, das Stößelende somit einen Abstand zum Ende des Eintreibkanals hat. Ist das Werkstück hingegen sehr hart, besteht die Gefahr, daß Steg und kürzerer Schenkel gegenüber dem längeren verbogen werden, so daß ein einwandfreies Eintreiben nicht mehr möglich ist. Im Weinbau werden zum Beispiel die Stützstangen aus Gründen der längeren Haltbarkeit aus einem sehr harten witterungsbeständigen Holz gefertigt. Selbst kräftige U-förmige Haken der erfindungsgemäßen Art verbiegen in der beschriebenen Weise beim Eintreiben. Daher liegt der Erfindung ferner die Aufgabe zugrunde, ein Eintreibgerät zum Eintreiben der erfindungsgemäßen Befestigungsmittelstreifen zu schaffen, das auch bei sehr harten Werkstücken eine einwandfreie Anbringung der hakenförmigen Befestigungsmittel ermöglicht.

Dies Aufgabe wird durch die Merkmale des Kennzeichnungsteils des Patentanspruchs 4 gelöst.

Beim erfindungsgemäßen Eintreibgerät weist der Eintreibstößel auf der dem Magazin zugewandten Rückseite eine Ausnehmung auf zur Aufnahme des stehnahen Abschnitts der Befestigungsmittel. Die Kraft beim Eintreibschlag wird daher nicht mit dem unteren freien Stößelende auf die obere Stegseite des Befestigungsmittels aufgebracht, wie das bei herkömmlichen Eintreibgeräten für U-Klammern der Fall ist, sondern über die Ausnehmung, von der der stegnahe Abschnitt des Befestigungsmittels aufgenommen ist. Die Ausnehmung kann zum Beispiel eine Schulter aufweisen, die von oben auf den Klammernsteg wirkt. Erfindungswesentlich ist ferner, daß in der Ausnehmung eine Anlagefläche vorgesehen ist zur Abstützung des Steges und/oder der Innenseite der Schenkel und/oder des freien Endes des kurzen Schenkels bei aufgenommener Klammer während des Eintreibschlags. Die Anlagefläche verhindert, daß Steg und kurzer Schenkel bei einem erheblichen Eintreibwiderstand am längeren Schenkel gegenüber diesem ab- oder umgebogen werden. Besonders vorteilhaft ist, wenn sowohl der Steg als auch die Schenkel von unten vzw. seitlich während des Eintreibschlags abgestützt werden, da auf diese Weise eine besonders wirksame Sicherung gegen ein ungewolltes Verbiegen erhalten wird.

Damit das erfindungsgemäße Befestigungsmittel von der Ausnehmung in Stößel aufgenommen wird, befindet sich die Ausnehmung in der oberen Totpunktlage des Stößels in einer Höhe relativ zum Befestigungsmittelstreifen, so daß das jeweils vorderste Befestigungsmittel vom Vorschieber in die Ausnehmung eingeschoben wird, wenn sich der Eintreibstößel in der oberen Totpunktlage befindet.

Es bestehen verschiedene Möglichkeiten, die Ausnehmung im Eintreibstößel des erfindungsgemäßen Eintreibgeräts konstruktiv zu verwirklichen. Eine besteht nach einer Aufgestaltung der Erfindung darin, daß die Ausnehmung einen L-förmigen, erhabenen Abschnitt aufweist, dessen Längssteg bei aufgenommenem Befestigungsmittel annähernd passend zwischen den Schenkeln unterhalb des Befestigungsmittelstegs liegt, während der Quersteg eine Anlagefläche für das untere Ende des kurzen Schenkels bildet.

Der Abstand des freien Endes des kurzen Schenkels von der Oberfläche des Werkstücks hängt davon ab, wie groß die Distanz der Ausnehmung bzw. der Anlagefläche vom freien Ende des Eintreibstößels ist bzw. welchen Abstand das freie Ende des Eintreibstößels ist von der Werkstückoberfläche in der unteren Totpunktlage aufweist. In jedem Fall ist dieser Abstand so zu wählen, daß bei eingeschlagenem Befestigungsmittel dieses seine hakenförmige Wirkung entfalten kann, beispielsweise einen Bindedraht für Weinranken aufnehmen kann. Falls erforderlich, kann ein eingetriebener Haken durch einen kurzen Hammerschlag oder dergleichen um den längeren eingetriebenen Schenkel etwas umgebogen wer den, so daß eine annähernd geschlossene Öse gebildet ist, die ein ungewolltes Herausbewegen des Drahtes verhindert.

Durch die Ausnehmung beim erfindungsgemäßen Eintreibgerät befindet sich das Befestigungsmittel noch teilweise im Eintreibkanal des Mündungswerkzeugs, wenn es in das Werkstück eingetrieben ist. Es ist daher notwendig, im Mündungswerkzeug Platz für das Lösen des Mündungswerkzeugs vom Befestigungsmittel zu schaffen. Dieser Platz kann zum Beispiel dadurch geschaffen werden, daß zwischen den Anlageflächen am Eintreibstößel und der Rückwand des Eintreibkanals so viel Platz geschaffen wird, daß der Steg des Befestigungsmittels hindurchgeführt werden kann. Besonders zweckmäßig ist nach einer weiteren Ausgestaltung der Erfindung, wenn der Eintreibkanal vom unteren Ende bis in Höhe der Stößelausnehmung in der unteren Totpunktstellung des Eintreibstößels über das an der Rückseite offene Mündungswerkzeug frei zugänglich ist. Bei dieser Ausführungsform braucht das Eintreibgerät nach dem Eintreiben eines Befestigungsmittels nur etwas nach vorn geschoben zu werden, um das Eintreibgerät vom Befestigungsmittel zu befreien.

Mit dem erfindungsgemäßen Eintreibgerät ist die Möglichkeit geschaffen, Stützpfähle bzw. -stangen für den Weinbau vollständig industriell vorzufertigen, d.h. bereit mit den Haken zu versehen. Die relativ dicken Haken aus Edelstahl (wegen der besseren Haltbarkeit) können jedoch auch in bereits in den Boden gesetzte Stangen oder Pfähle eingetrieben werden. Das erfindungsgemäße Eintreibgerät ermöglicht daher eine weitaus rationellere Arbeitsweise im Weinberg als bisher.

Die Erfindung wird nachfolgend anhand von Zeichnungen näher erläutert.

Fig. 1 zeigt in Seitenansicht, teilweise im Schnitt, ein Eintreibgerät nach der Erfindung.

Fig. 2 zeigt einen Schnitt durch die Darstellung nach Fig. 1 entland der Linie 2-2.

Fig. 3 zeigt eine ähnliche Darstellung wie Fig. 2, jedoch in einem anderen Betriebszustand des Eintreibgeräts.

Fig. 4 zeigt eine Seitenansicht des Eintreibstößels des Eintreibgeräts nach Fig. 1.

Fig. 5 zeigt einen Schnitt durch die Darstellung nach Fig. 4 entland der Linie 5-5.

Fig. 6 zeigt eine Seitenansicht des Eintreibstößels nach Fig. 4 in Richtung Pfeil 6.

Fig. 7 zeigt einen Schnitt durch die Darstellung nach Fig. 2 entlang der Linie 7-7.

Bevor auf die in den Zeichnungen dargestellten Einzelheiten näher eingegangen wird, sei vorangestellt, daß jedes der beschriebenen Merkmale für sich oder in Verbindung mit Merkmalen der Ansprüche von erfindungswesentlicher Bedeutung ist.

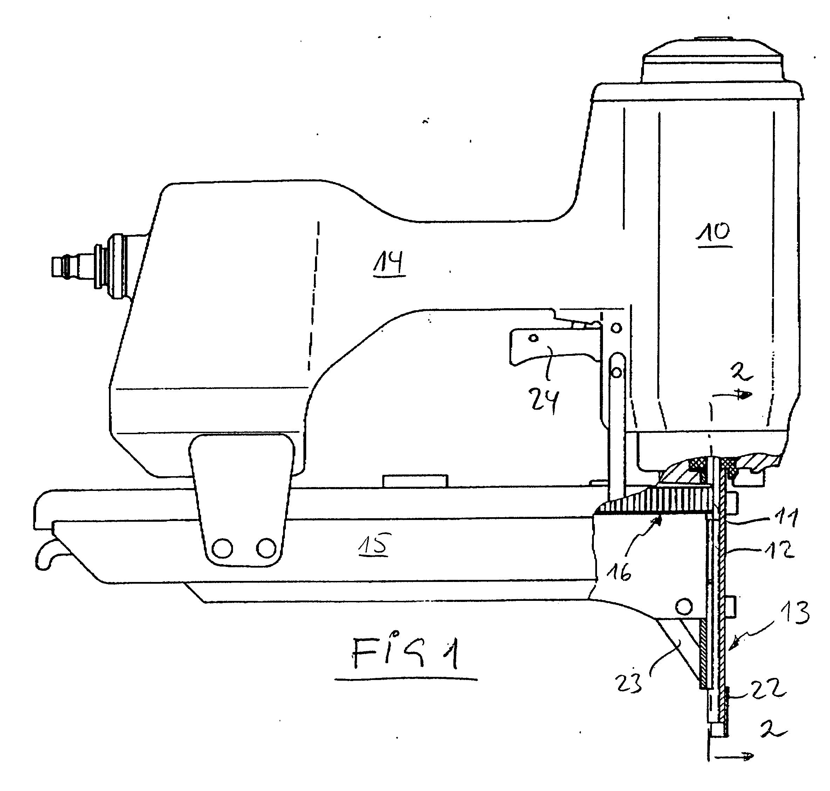

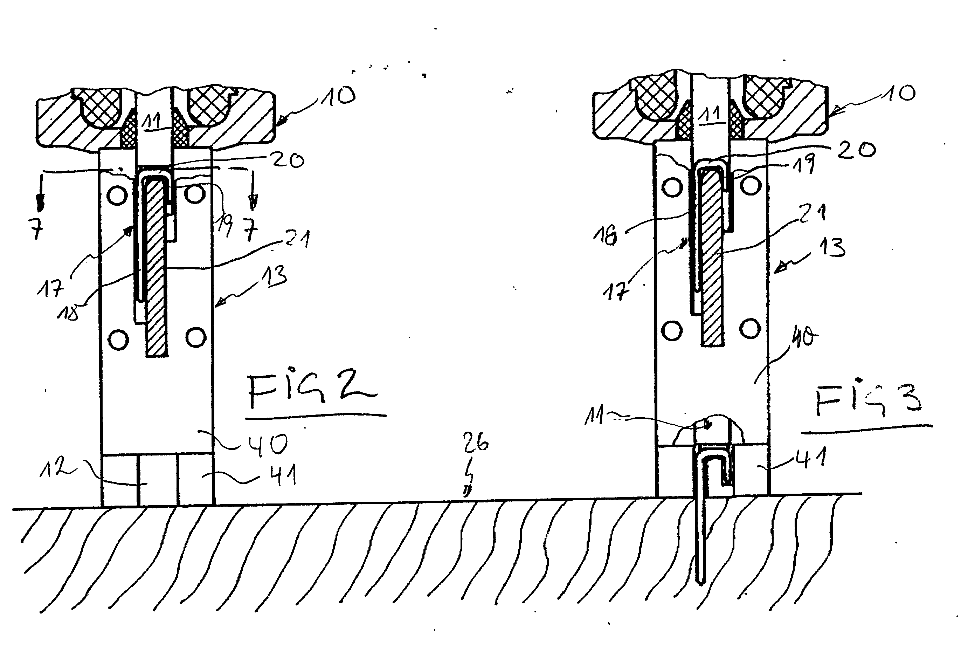

Das in Fig. 1 dargestellte Eintreibgerät weist in herkömmlicher Weise ein Gehäuse 10 auf, in dem ein pneumatisch angetriebener Kolben in einem Zylinder geführt ist. Mit dem Kolben ist ein Eintreibstößel 11 verbunden, der in einem Eintreibkanal 12 eines Mündungswerkzeugs 13 geführt ist. Über ein Griffteil 14, das zugleich ein Druckluftreservoir bildet, ist ein Magazin 15 am Gehäuse 10 befestigt. Im vorderen Bereich ist es am Mündungswerkzeug 13 befestigt. Im Magazin 15 ist ein Befestigungsmittelstab 16 angeordnet, der mit Hilfe eines nicht gezeigten Vorschie bers in Richtung Eintreibkanal 12 vorgeschoben wird. Der Befestigungsmittelstreifen 16 besteht aus U-förmigen Befestigungsmitteln 17 (siehe Figuren 2 und 3), die aus einem langen Schenkel 18 und einem kurzen Schenkel 19 bestehen, die über einen Steg 20 miteinander verbunden sind. Die Befestigungsmittel 17 gleichen einer herkömmlichen U-Klammer, von der eine Schenkel beträchtlich verkürzt ist, so daß der stegnahe Abschnitt die Form eines Hakens oder einer Krücke aufweist. In dieser Form des Befestigungsmittels lassen sich Haken zu einem Streifen oder Stab aufreihen und in der gezeigten Weise magazinieren. Sie können daher, wie bei U-Klammern gehandhabt, auf einer Führungsschiene 21 reiten und mit Hilfe des nicht gezeigten Vorschiebers auf der Führungsschiene 21 vorgeschoben werden. Der längere Schenkel 18 ist vorzugsweise angespitzt. Auch der kürzere Schenkel kann mit einer Spitze versehen werden.

Die bisher beschriebenen Teile des Eintreibgeräts nach Fig. 1 sind an sich bekannt, auch ein gleitend am Mündungswerkzeug 13 gelagertes Fühlelement 22, das das untere Ende des Mündungswerkzeugs normalerweise überragt und über ein Hebelgestänge 23 mit dem Auslösehebel 24 für das Eintreibgerät gekoppelt ist. Wird das Mündungswerkzeug 13 auf ein Werkstück aufgesetzt, beispielsweise das Werkstück 26 in den Figuren 2 oder 3, wird das Fühlelement 22 nach oben geschoben und betätigt das Gestänge 23. Dadurch wird der Auslösehebel 24 entriegelt.

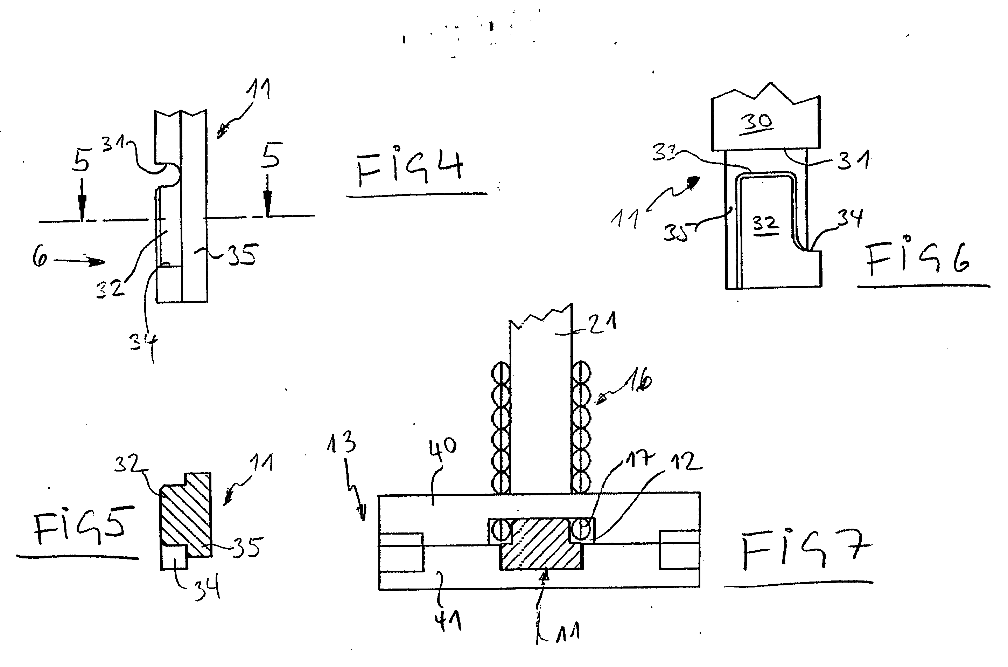

Im folgenden wird der Aufbau des Eintreibstößels 11 anhand der Fign. 4 bis 6 näher erläutert. Wie insbesondere aus Fig. 6 hervorgeht, weist der Eintreibstößel 11 im oberen Bereich Rechteckquerschnitt auf, wie bei 30 zu erkennen. Am Ende des Abschnitts 30 verringert sich die Breite an beiden Seiten um einen gewissen Betrag, der - im Zeichnungsbeispiel -etwa dem halben Durchmesser des Drahtes für die Befestigungsmittel entspricht. Außerdem ist zur rückwärtigen Seite eine Schulter 31 gebildet. Im Abstand unterhalb der Schulter 31 befindet sich ein L-förmiger erhabener Abschnitt 32, der eine obere Anlagefläche 33 für einen Befestigungsmittelsteg 20 bildet. Der Quersteg des L-förmigen Abschnitts 32 bildet mit seiner Oberseite eine Anlagefläche 34 für das freie Ende des kürzeren Schenkels 19 des Befestigungsmittels 17. Der Längssteg des erhabenen Abschnitts 32 ist gegenüber dem Stößelabschnitt 35 in diesem Bereich etwas zurückverlegt, und zwar auf beiden Seiten, während der Quersteg des erhabenen Abschnitts 32 zur rechten Seite sich bis zur rechten Kante des oberen Abschnitts 30 des Stößels 11 erstreckt. Durch die Kontur des Stößels 11 im unteren Bereich wird eine Ausnehmung gebildet, die den stegnahen Abschnitt des Befestigungsmittels 17 aufnehmen kann, wie in den Figuren 2 und 3 gezeigt. In der oberen Totpunktlage des Stößels 11 ist diese Ausnehmung so angeordnet, daß das jeweils vorderste Befestigungsmittel 17 aufgenommen werden kann. Die Schulter 31 befindet sich daher etwas oberhalb der Oberseite der Stege des Befestigungsmittelstreifens 16. Die Schenkel der Befestigungsmittel sind durch den erhabenen Abschnitt 32 an der Innenseite allseitig geführt und im Stegabschnitt und am Ende des kürzeren Schenkels abgestützt, wie auch aus Fig. 7 hervorgeht.

Das Mündungswerkzeug 13 besteht aus zwei gegeneinanderliegenden Platten 40, 41, die mittels kanalförmiger Ausnehmungen den Eintreibkanal 12 bilden, wie in Fig. 7 gezeigt. Es versteht sich, daß der Eintreibkanal so ausgebildet werden muß, daß er den Eintreibstößel 11 zusammen mit dem in der Ausnehmung aufgenommenen Befestigungsmittel allseitig führt. Wie aus Fig. 3 zu erkennen, wird der stegnahe Abschnitt des Befestigungsmittels 17 während des gesamten Eintreibvorgangs geführt. Der obere Bereich des längeren Schenkels 18 liegt zwischen der zugeordneten Wand des Eintreibkanals 12 und der zugekehrten Führungsseite des erhabenen Abschnitts 32. Der Steg 22 liegt zwischen der Schulter 31 und der Oberseite 33 des erhabenen Abschnitts 32. Der kürzere Schenkel 19 wird zwischen der zugeordneten Kanalwand und der zugeordneten Außenseite des Längsstegs des erhabenen Abschnitts 32 geführt, wobei das freie Ende an der Anlagefläche 34 abstützbar ist. Der stegnahe Abschnitt des Befestigungsmittels behält daher seine Form bei, auch wenn der längere Schenkel in ein besonders hartes Werkstück 26 eingetrieben wird.

Wie aus Figuren 2 und 3 zu erkennen, ist die rückseitige Platte 41 des Mündungswerkzeugs 13 kürzer als die Platte 41, sie endet mithin in einem Abstand zum freien Ende des Mündungswerkzeugs. Dadurch ist der Eintreibkanal 12 frei, und zwar bis in Höhe der Schulter 31, wenn sich der Stößel 11 in seiner unteren Totpunktlage befindet (siehe Fig. 3). Das in das Werkstück 26 eingetriebene Befestigungsmittel 17 kann daher durch ein Vorschieben des Eintreibgeräts von diesem befreit werden.

**Ansprüche**

1. Aus mehreren U-förmigen Befestigungsmitteln zusammengesetzter Befestigungsmittelstreifen oder -stab für Eintreibgeräte, dadurch gekennzeichnet, daß die Länge des einen Schenkels (19) der den Befestigungsmittelstreifen bildenden Befestigungsmittel (17) gegenüber dem anderen (18) deutlich kürzer ist.

2. Befestigungsmittelstreifen nach Anspruch 1, dadurch gekennzeichnet, daß der kurze Schenkel (19) höchstens ein Drittel der Länge des langen Schenkels (18)aufweist.

3. Befestigungsmittelstreifen nach Anspruch 1 oder 2, dadurch gekennzeichnet, daß zumindest das Ende des längeren Schenkels (18) angespitzt ist.

4. Eintreibgerät zum Eintreiben von U-förmigen Befestigungsmitteln nach einem der Ansprüche 1 bis 3, mit einem Magazin (15) zur Aufnahme des Befestigungsmittelstreifens (16), der mittels eines Vorschiebers in Richtung eines in einem Mündungswerkzeug (13) ausgebildeten Eintreibkanals (12) vorgeschoben wird, und einem kraftgetriebenen Stößel (11) zum Trennen eines Befestigungsmittels (17) vom Befestigungsmittelstreifen (16) und Eintreiben in ein Werkstück (26) über dem Eintreibkanal (12), dadurch gekennzeichnet, daß der Eintreibstößel (11) auf der dem Magazin (15) zugewandten Rückseite eine Ausnehmung aufweist zur Aufnahme des stegnahen Abschnitts des Befestigungsmittels (17), die Ausnehmung eine Anlagefläche aufweist zur Abstützung des Steges (20) und/oder eines oder beider Schenkel (18, 19) und/oder des freien Endes des kurzen Schenkels (19) bei aufgenommenem Befestigungsmittel während des Eintreibschlags, die Ausnehmung in der oberen Totpunktlage des Eintreibstößels (11) zum Befestigungsmittelstreifen (16) ausgerichtet ist und daß das Mündungswerkzeug (13) in dem unteren Bereich so ausgebildet ist, daß durch eine Bewegung des Mündungswerkzeugs (13) gegenüber einem eingetriebenen Befestigungsmittel (17) dieses aus der Ausnehmung zu befreien ist.

5. Eintreibgerät nach Anspruch 4, dadurch gekennzeichnet, daß die Ausnehmung einen L-förmigen erhabenen Abschnitt (32) aufweist, dessen Längssteg bei aufgenommenem Befestigungsmittel annähernd passend zwischen den Schenkeln (18, 19) unterhalb des Befestigungsmittelsteges (20) liegt, während der Quersteg eine Anlagefläche (34) für das Ende des kürzeren Schenkels (19) bildet.

6. Eintreibgerät nach Anspruch 5, dadurch gekennzeichnet, daß der Eintreibkanal (12) vom unteren Ende bis in Höhe der Stößelausnehmung in der unteren Totpunktstellung des Eintreibstößels über das an der Rückseite offene Mündungswerkzeug frei zugänglich ist.

Fig. 1

FIG 2

FIG 3

EP 0 314 831 A1

FIG4

FIG6

FIG5

FIG7

EP 0 314 831 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 589 491 (C.B. GOODSTEIN) * Spalte 3, Zeilen 60-64; Figur 2 * | 1,2. | F 16 B 15/02 B 25 C 5/10 |
| Y | | 3 | |
| Y | US-A-1 816 387 (E.W. MENNINGER) * Seite 5, rechte Spalte, Zeilen 74-77; Figur 2 * | 3 | |
| A | | 1,2 | |
| A | US-A-3 279 672 (D.P. McKEE) * Spalte 3, Zeilen 47-61; Figuren 1,2,4,10 * | 1,3,4 | |
| A | FR-A-2 368 341 (C. ROY) * Seite 1, Zeilen 1,2; Seite 2, Zeilen 29-38; Figuren 1,2 * | 1,4 | |

RECHERCHIERTE SACHGEBIETE (Int. Cl.4)

F 16 B
B 25 C
B 25 B

Der vorliegende Recherchenbericht wurde für alle Patentansprüche erstellt

| Recherchenort | Abschlußdatum der Recherche | Prüfer |
|---|---|---|
| DEN HAAG | 11-04-1988 | ARESO Y SALINAS J. |